# EUROPEAN PATENT APPLICATION

(11) **EP 1 211 860 A1**
(43) Date of publication of application: **05.06.2002**
(21) Application number: 00310674.7
(22) Date of filing: 01.12.2000
(51) Int. Cl.: H04L 29/06

(54) **Provision of secure access for telecommunications system**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

In order to gain access to data on a secure network (19) a user (31) is challenged (73) to provide a password or other security access codes (74). If he is successful an authorisation "cookie" is set (65) such that on subsequent attempts to access data, if the cookie is present (62) access to the database (19) is permitted without the requirement for a challenge (73, 74)

The invention is particularly suited for secure access to mobile packet data systems in which no permanent connection exists between the user (31) and the secure network (19), to avoid the need for a new challenge for every access attempt.

## Description

This invention relates to the provision of secure access for telecommunications systems, and in particular in the provision of secure access to the "Internet" or similar distributed or other computer networks using dial-in telecommunications links. Provision of secure access is necessary to prevent abuses by unauthorised users, for example by gaining access to confidential information such as that available on private "Intranets", or by getting unauthorised access to funds.

It is common practice to provide secure access to systems by requiring the user to enter a security code (Personal Identity Number or "PIN") known only to the authorised user. However, such codes are vulnerable to interception when they are transmitted during the log-on process. They must also be easy to remember by the user, so they have to be relatively simple - typically only four digits in length.

Some systems make use of single-use access codes generated by a pseudo-random process and displayed on a "token" carried by the user. The token is a device, independent of the telecommunications system, which runs a pseudo-random, time-based algorithm which causes a numerical passcode to be displayed on a screen. As part of the log-on process to be performed when a user wishes to make connection to the network, he reads the passcode currently displayed by the token and uses his terminal to transmit the passcode to the network as plain text once initial connection is made to the network, but before the user is assigned an IP address and an actual connection. An access control server at the network end performs the same algorithm, in synchronism with the token. The code generated by the access control server must match that received from the user terminal if network authentication is to be allowed. If the code transmitted by the user is intercepted, it cannot be misused on subsequent occasions as it changes frequently (typically after a few minutes) in a pseudo-random manner. In order to prevent misuse of stolen or mislaid tokens, it is usual for both a PIN and a token passcode to be required for successful connection to the network.

In a modified system, a keypad is used to enable users to login with a password which is an encrypted combination of the PIN and token code. Using a keypad on the token device, a user enters his secret PIN directly into the token device, which generates an encrypted passcode for transmission to the access control server. This additional level of security is especially appropriate for users in application environments who are concerned that a secret PIN might be compromised through electronic eavesdropping, as it effectively encrypts the secret PIN before it is entered into the users terminal.

These procedures require the user terminal to be configured to interrupt the log-in process by prompting the user to enter the access code, and to abort the log-in process if the correct code is not transmitted. Although typical general-purpose desktop and laptop computers can be configured to do this, the process is cumbersome, and inconvenient if the terminal is only likely to be used for secure access occasionally. Moreover, some devices and systems currently on the market, such as "WAP" (Wireless Application Protocol) telephones, have their login process, including the user identification, permanently programmed into their operating systems, and do not have the capability to interrupt this network connection process to provide the required authentication codes. WAP phones establish an Internet Protocol session and then pass WTP (WAP Transport Protocol) signalling over this connection to connect to the WAP server. The phones then operate as a normal anonymous internet connection. They do not have the facility to allow the user to enter a variable code after dialling, and therefore they cannot be used to allow secure network login. Such telephones can, of course, also be used to make ordinary telephone calls over the public switched telephone network (PSTN), and can transmit DTMF (dual tone multi-frequency) signals like a conventional telephone.

It is known from United States applications 5668876 and 5920805 to authorise access over a secure connection by transmitting authentication data over a separate connection. Such arrangements rely on correct association of the two connections.

According to the invention there is provided an access control system for controlling access from a terminal to a database, comprising:
a gateway processor having a means for storing authorisation data relating to terminals authorised to access the database, and means for receiving data requests, means for adding said authorisation data, if present, to data requests originating from said terminals, and means for forwarding the data requests; and
an access control processor for controlling access to the database, comprising means to access the database in response to data requests received form the gateway processor carrying said authorisation data, means to perform a security check process with terminals originating data requests not carrying said authorisation data, and means to generate authorisation data for storage by the gateway processor in response to a successful security check.

In order to gain access to a secure network the user can therefore be challenged to provide a password. If he is successful the authorisation data (known as a "cookie") is set, such that on subsequent attempts to access data, if the cookie is present access to the database is permitted without the requirement for a challenge.

The invention is particularly suited for secure access to mobile packet data systems in which no permanent connection exists between the user and the secure network, to avoid the need for a new challenge for every access attempt.

In one arrangement the access control system has a logon server arranged to initiate the security check process, the access control processor being arranged such that data requests not carrying said authorisation data are refused unless addressed to the logon server.

The gateway processor may have means for storing data requests received from terminals for which authorisation data is not currently stored, and retrieving the stored data request in response to receipt from the access control processor of authorisation data generated in respect of that terminal.

The gateway processor may have means for transmitting an authorisation request message to the access control processor if said authorisation data is not present, or alternatively the storage means may be the access control processor itself, being arranged to return the data request to the gateway processor when authorisation data has been generated in respect of that terminal.

The gateway processor may have means for converting data messages between a protocol used by the user terminal and a different protocol used by the access control processor and the database. The access control processor may itself have means for translating data messages between a language used by the user terminal and a different language used by the database.

Preferably, the access control processor has means for delivering a security challenge to a terminal and receiving a response, and responding to a correct response by generating the authorisation data.

The access control system is preferably used in association with a routing node arranged such that all communication between any two of the access control system, the database, and a user terminal is routed by way of the routing node, and all the routing node being arranged such that all communication from user terminal addressed to the database is routed to the access control system.

According to a second aspect, there is provided a method of controlling access from a terminal to a database, comprising the steps of :
receiving a data request from the terminal;
checking whether authorisation data has been stored for said terminal;
if said authorisation data has not been stored, performing a security check process with the terminal;
generating and storing authorisation data in response to a successful security check;
accessing said database;
wherein the stored authorisation data, if present, is added to the data request if authorisation data is present for the said terminal, such that a security check is not required for requests from terminals for which authorisation data has previously been stored .

Data requests may also be translated from a system used by the terminal to a system used by the database. Preferably, all communication between the user terminal and the database is routed by way of a routing node, and all communication from the user terminals addressed to the database is subjected to the above method.

This invention overcomes the limitations of telephone apparatus not configured or equipped for transmission of such codes during the login process by providing an interface which is itself accessible without such codes, but which can itself control access. It provides a flexible and secure remote access solution, that can be used to allow mobile workers to gain access to their corporate network from a handheld device supporting a WAP-compatible browser, using the same authentication mechanism used by laptop and desktop machines.

Embodiments of the invention will now be discussed by way of example, with reference to the drawings, which illustrate the various elements which cooperate to perform the invention. In the drawings:
Figure 1 illustrates a first prior art system
Figure 2 is a flow chart illustrating the operation of the first prior art system
Figure 3 illustrates a second prior art system
Figure 4 is a flow chart illustrating the operation of the second prior art system
Figure 5 illustrates a system according to the invention
Figure 6 is a flow chart illustrating the processes taking place in a first embodiment of the invention
Figure 7 is a flow chart illustrating the processes taking place in a second embodiment of the invention
These embodiments of the invention makes use of the "Wireless Application Protocol (WAP)", which is a collection of protocols and transport layers that allow mobile and portable communication devices such as mobile phones and Personal Digital Assistants (PDA's), to receive information over the mobile data networks (GSM or GPRS). To create information that can be viewed by WAP browsers, pages must be written in WML (Wireless Markup Language) instead of HTML (hypertext markup language). WML is used in a similar way to HTML; pages are created using a text editor, using the formatting and tokens available, and then these files are placed on a web server just as HTML pages are. Existing web servers can be used to provide content to both HTML and WML devices.

WAP gateways provide the interface between wireless WAP systems and the traditional fixed Internet (IP) technology as is used on the Internet and corporate intranets. This interface is necessary because WAP uses protocols optimised for the wireless environment. WAP is independent of the mobile bearer so will work over both current GSM and forthcoming GPRS technologies.

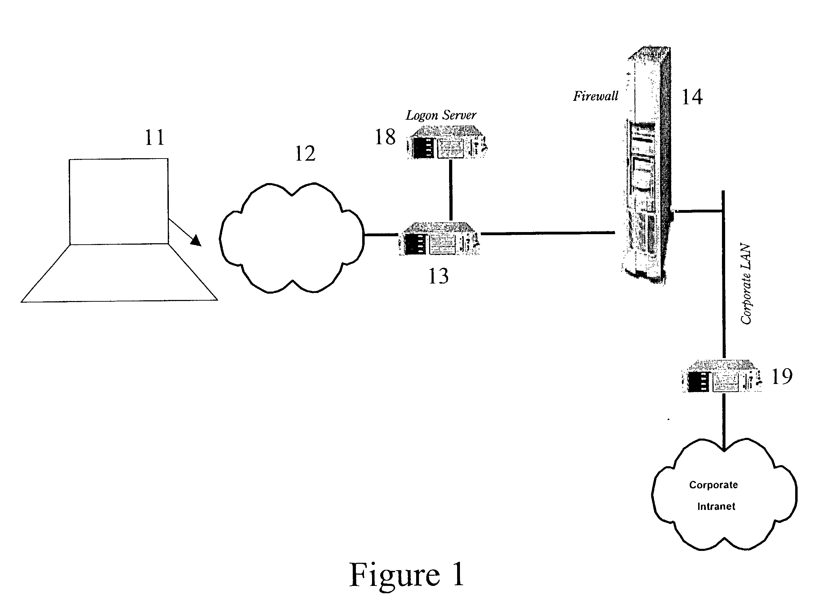

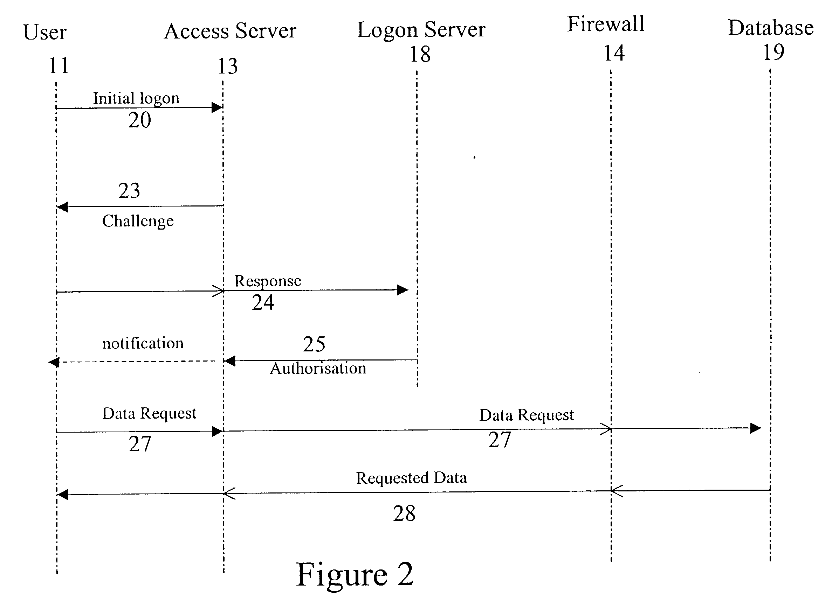

Figure 1 illustrates a typical "firewall" protected intranet access system, and Figure 2 is a flow chart illustrating its method of operation. In this arrangement a user terminal 11 is connected through an access network 12, typically a fixed high bandwidth system, to a network access server (NAS) 13. The network access server has an associated security logon server 18. The server 13 routes calls to a secure network 19, for example a corporate "Intranet", by way of a firewall system 14. The firewall is essentially a node in the packet switched network through which all data calls to addresses in the secure network 19 have to pass. The access server 13 will not pass such calls to the node 14 unless the call originates from an authorised terminal 11.

In operation a user first connects his terminal 11 to the access server 13 (step 20, Figure 2) and then transmits, from his terminal 11, an HTML request (step 21, Figure 2). The server 13 returns a "challenge" to the terminal 11 (step 23). (Typically the format of the challenge is an HTML page, requiring certain responses from the user.). The user then provides the necessary security information (password, token code, etc) (step 24) and transmits them to the server 13. The server 13 forwards these to a logon server 18 which checks that the details are correct, and if they are it transmits an instruction (step 25) which causes the server 13 to accept the user. A notification is forwarded to the user (step 250). The access server 13 will now accept data requests and forward them to the network 19 (step 27), which will return the requested data .

This arrangement us suitable for a system in which the user 11 is on a fixed connection 12 to the access server 13. However, as will be seen, access arrangements for mobile data preclude this simple arrangement.

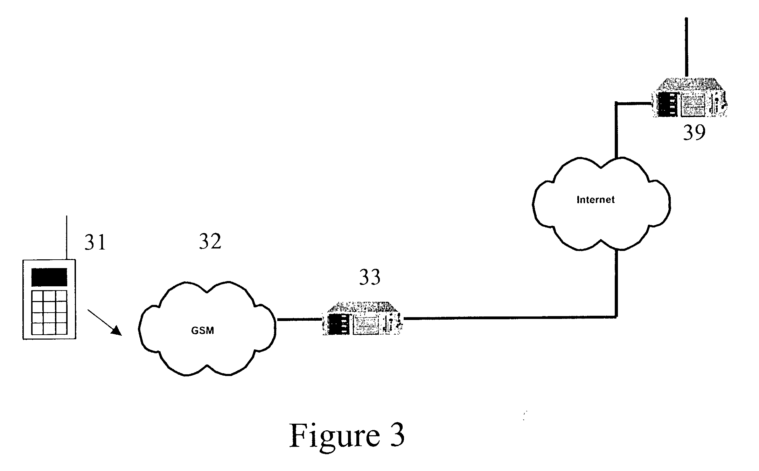

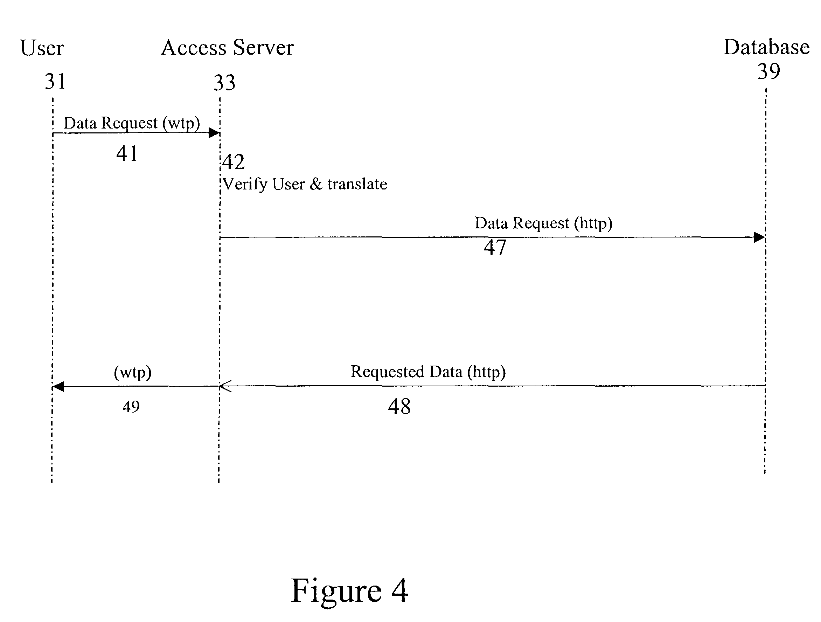

Figure 3 illustrates a typical WAP internet access system, and Figure 4 is a flow chart illustrating its method of operation. A WAP-enabled mobile telephone 31 is connected through an access network 32 (a cellular network according to the GSM/GPRS standard) to a network access server (NAS) 33. The server 33 routes calls through the "Internet" to a content server 39 according to the address specified by the user.

The WAP phone 31 is a standard mobile phone, of the kind capable of making data connections and running the WAP protocols to an inbuilt browser. As no universal standard has yet been established for such devices there are a number of differences in the feature sets supported by the proprietary devices currently available. However, they all need a common set of configurations to provide dial-in internet access and access to the network access server 33. In addition it is possible in some to enter the details of the homepage to be accessed.

The WAP Protocol is designed to be bearer-independent and will run over any system capable of UDP or IP traffic. This means that the data may be delivered over any network 32 capable of supporting such traffic.

The dial-up network access server 33 is the means through which the customer equipment gains access to other parts of the network. This provides basic authentication, in terms of a username and password associated with the mobile phone 31 to create an IP session.

In operation a user transmits, from his terminal 31, a WML request (step 41, Figure 4). (If should be noted that as this is a packet system there is no continuous connection between the user terminal 31 and the access server 33, as there is between the user terminal 11 and the access server 13 in Figure 1). The access server 33 identifies the originating user terminal (step 42) in order to ensure that the terminal identity is a valid account, and to provide a return address for the required data. It also accesses the content server 39 requested (step 47), which then delivers the required data to the access server (step 48), where it is translated to WTP format and delivered to the user terminal 31 (step 49).

The WAP system is designed for public access internet sites. Neither the WAP access server 33 nor the content server 39 require any form of access control other than the simple check that the originating device is associated with a valid account. There is no provision for suspending the "logon" process to allow for password protection.

It can therefore be seen that the access scheme used by the WAP system of Figures 3 and 4 is not capable of direct interaction with the firewall system of Figures 1 and 2. The invention provides a modification of the system of the firewall system Figure 1 to allow access by authorised users of mobile devices, as will now be described.

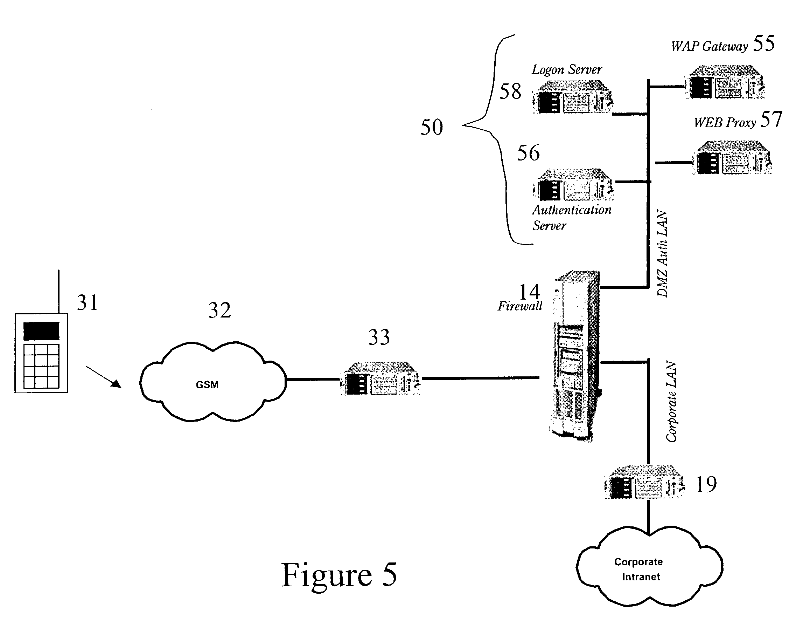

The system as shown in Figure 5 provides a secure access server system 50 providing an interface between the mobile data access system network 31, 32, 33 of Figure 3 and the secure network 14, 19 of Figure 1, comprising a number of access control servers 55, 56, 57, 58 which will be described in detail.

The customer equipment 31 (in this embodiment a WAP-enabled mobile telephone) is connected through an access network 32 (a cellular network according to the GSM/GPRS standard) to a network access server (NAS) 33, in the same way as shown in Figure 3. The server 33 routes calls to a secure network 19 by way of a firewall system 14 which provides secure access to the secure network 19. The firewall 14 routes all calls from the dial up server 33 to the secure access system 50, which is only accessible by way of the firewall node 14. The firewall 14 is also positioned between the secure access system 50 and the corporate network 19, so that requests from the access system can only go to particular addresses in the secure system 19 which have been suitably configured. It is therefore possible to configure the secure system 19 to provide access from the mobile units 31 to specified machines only.

Access to the secure access server system 50 from public networks such as that controlled by the servers 13 (Figure 1), 33 is only possible by way of the firewall system 14. It should be noted that, unlike the access server 13 in the fixed system of Figure 1, the access server 33 does not carry out any password check before forwarding data calls to the firewall system 14. The firewall 14 is arranged to route any calls not originating from access servers with password protection facilities to the secure access server system 50.

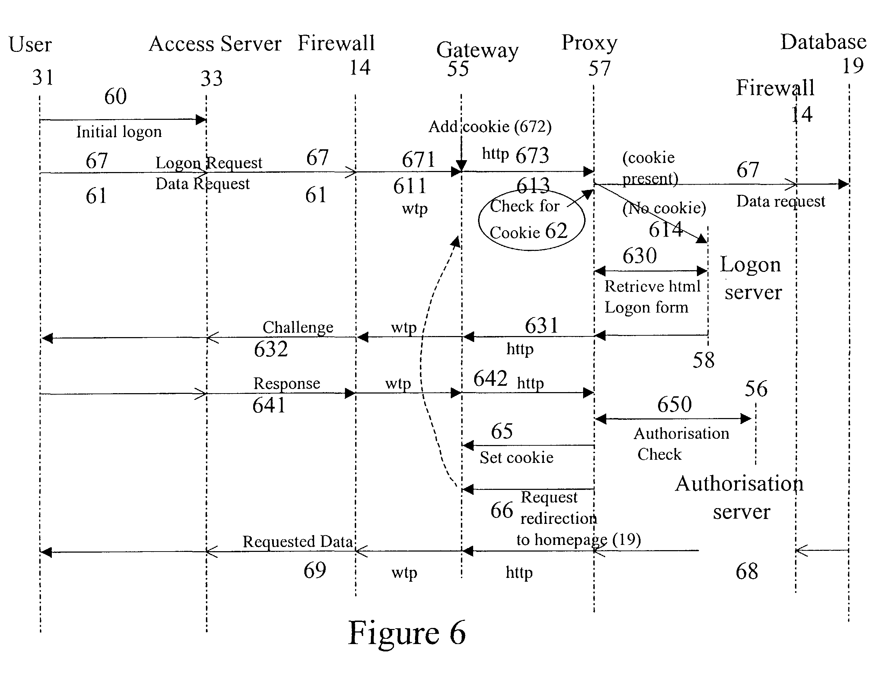

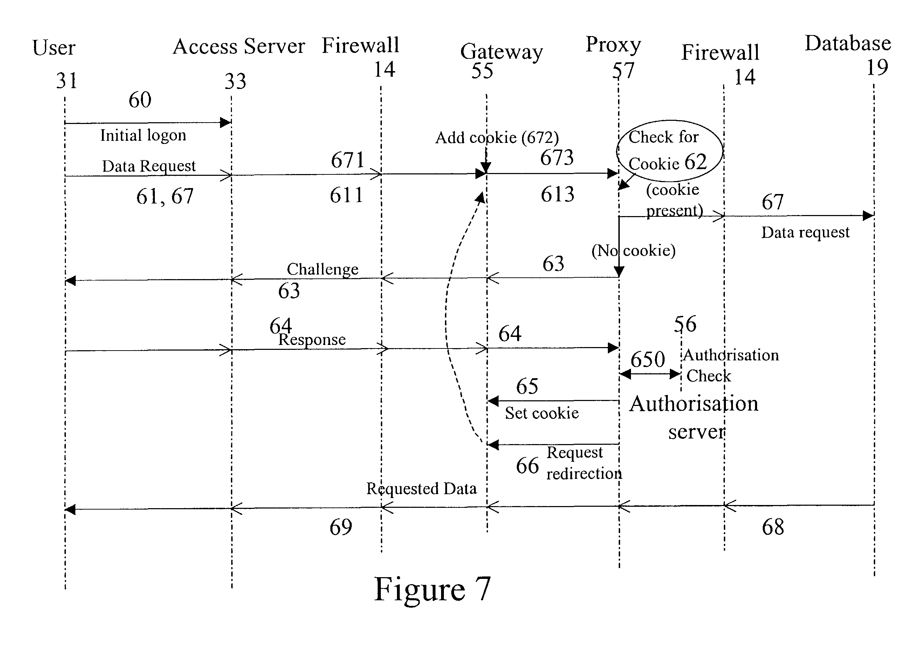

Moreover, access between the secure access server system 50 and the secure network 19 is only possible by way of the firewall system 14. The access server system 50 comprises a WAP gateway server 55, an authentication server 56, a access control processor 57, here embodied as a web proxy system, and a logon server 58. The gateway server 55 converts beteween http and wtp protocols. The logon server 58 provides a homepage for the user, accessed by the gateway server 55 through an unprotected area of the proxy 57 to allow an unauthenticated user to request a copy of the logon form. In one embodiment, whose operation is illustrated in Figure 6, the logon server 58 retrieves a copy of the logon form from the proxy server 57, converts the form from HTML to WML and returns it to the device 31. In the alternative embodiment described in Figure 7 a modified proxy 57 identifies the type of device 31 and itself returns a form of appropriate type, making such conversions unnecessary.

The operation of these elements will be discussed in more detail later.

The secure access server system 50 is described as a number of functional units. It will be apparent to the person skilled in the art that the invention may be embodied in software, and that two or more of the functional units may be arranged to run on the same computer device.

The gateway server 55 holds "cookies" which have been set by the application servers 19. "Cookies" are computer code generated by one device (in this case the application servers of the secure network 19) for storage in another (the gateway server 55) to assist in establishing communication between them. These cookies are held in memory on the gateway server 55 only for the duration of the session between the gateway server 55 and the device 31. Once the device 31 has disconnected and the session is ended then the cookies are deleted.

A suitable access gateway server 55 which may be used is a WAPLite gateway - v1.10 SP1B made by Infinite Technologies Inc of Owings Mills, MD 21117 USA. This is capable of supporting WTLS connections, HTTP 302 redirection and storage of cookies during the session and runs as a service under Windows NT. In the embodiments, whose operation is to be described with reference to Figures 6 and 7, the gateway server 55 translates the protocol transmitted across the mobile network 32 (Wireless Transport Protocol - WTP) into normal internet requests (Hyper Text Transport Protocol - HTTP). This gateway does not change the content which is sent in any way. It terminates the encrypted session which is established from the device using the Wireless Transport Level Security - WTLS which provides security of data over the wireless network. The gateway server 55 can also provide encryption to the content servers if required. Except where stated, the system operates in WAP markup language (WML) throughout, carried on the WAP transport protocol (WTP) on the network side (31, 32, 33) of the gateway 55 and hypertext transport protocol (HTTP) on the other side (19,50). It should be noted that WML can be carried by both the HTTP and WTP protocols, but HTML is not compatible with the WTP protocol, and must be converted to WML form for communication over the WTP protocol.

The authentication server 56 may be a standard RADIUS/ACE authentication server made by RSA Security of Bedford, MA USA 01730.

The proxy server 57 may generate a SecurlD challenge by running a WeblD agent as provided by RSA Security, on a standard Netscape proxy server.

All traffic from the gateway server 55 is routed through the proxy server 57, running as a reverse proxy, that is to say, a client sees all data coming from the proxy box and has no knowledge of the actual content servers. The data on the content servers is protected by the proxy 57 which prompts unauthenticated sessions with a request for authentication, but provide the requested content for users running a session in which authentication has already been performed. The proxy server 57 is configured to have a single protected virtual directory under which a series of mappings are produced to link to the content servers and an unprotected area which provides the WAPSecure logon pages.

The process of authentication and delivery of content will now be described with reference to Figures 6 and 7, which illustrate two methods of operation of the arrangement illustrated in Figure 5. Unless otherwise stated, the following steps are common to both processes, and the same reference numerals are used in each. (Note that for convenience the firewall 14 is represented twice in these figures, between the public access server 33 and the secure access server system 50, and between the secure access server system 50 and the secure data system 19).

The user dials in to the dial-up network access server 33 from his terminal 31 using his username and password, and establishes an IP connection (step 60)

The user now attempts to access the intranet homepage (step 61). The homepage is actually stored at an address on the Intranet server 19, but the initial logon address is on the logon server 58 (Figure 6) or on the proxy server 57 (figure 7).

In the first embodiment (Figure 6) data requests are passed to the gateway server 55, (step 611) which translate them into HTTP format for transmission to the proxy 57 (step 612). If an authentication "cookie" is present in the gateway server 55, in respect of the originating user address (31), this would be added to the HTML request (step 672). The cookie, if present, will have been generated from a previous request (see step 65), but at the beginning of a new session no cookie will be present. If no cookie is present, the gateway may store the original data request and forward a "dummy" request (step 613), conveying only the user identity and the fact of there being no cookie. The proxy checks the incoming message for the presence of a cookie (step 62). If no cookie is present the proxy 57 will not in general forward the request. However, if the request is directed to the unprotected logon server 58 it will forward the request even though no cookie is present. The logon server sends a challenge to the user (step 63). This is a form in HTML format, requiring certain responses from the user, which is retrieved from the proxy 57 (step 630). The logon server 58 translates the HTML challenge to WML and sends it to the gateway server 55 (step 631). The gateway server converts the underlying protocol from HTTP to WTP and forwards it to the user terminal 31 (step 632). The user returns the required information (password, token code, etc) and then returns it from the user terminal 31 to the proxy 57 (step 64). The gateway server 55 again has to convert the form from WTP protocol (step 641) to HTTP protocol (step 642).

In the second embodiment (Figure 7) the proxy 57 is itself capable of recognising the request as a WML access request, from the HTTP header information, so the logon server 58 is not required to convert transmissions from one language to another. The request, with the cookie added if present (step 673) can therefore be routed direct to the proxy 57 in WML form (step 613). As in the Figure 6 process, the proxy 57 checks whether an authentication "cookie" is present in the request (step 62). If the user terminal 31 making the request is not currently authorised, the proxy returns a challenge (step 63), which in this process is in WML form and can therefore be sent directly to the user terminal 31 without translation as required in Figure 6. The user completes the challenge form and the terminal 31 then returns the form to the proxy 57 (step 64).

The difference between the two embodiments is that in Figure 7 the proxy server 57 can generate logon forms in WML language, and so logon requests are addressed to it. In Figure 6 the proxy server can only generate logon forms in HTML language, so logon requests are routed instead to a logon server 58 which is configured to retrieve the HTML form from the proxy server, convert it to WML, and deliver it to the user.

In both the embodiments of Figures 6 and 7, the proxy 57 checks the authentication data transmitted by the user against the data held in the authentication server 56 (step 650). If it is correct the proxy 57 sets a cookie on the gateway server 55 (step 65). The proxy server 57 now sends to the gateway server 55 an instruction to retransmit the logon request (step 66) to the true homepage in the secure network 19. (This may be an instruction to transmit the request stored when the dummy request was generated (step 612) or, if it was not stored by the gateway 55, the proxy returns the full data request itself to the gateway 55. The gateway server 55 accepts the redirection instruction and adds the cookie which is now stored for the user 31 (step 672), and transmits the redirected request to the proxy (step 673). The proxy 57 checks for the cookie (step 62 repeated). Since a cookie is now present the proxy 57 allows the request to be directed to the secure network 19, (step 673) which returns them to the proxy (step 68) which in turn delivers them to the user device 31 (step 69)

When a subsequent request (step 67) is made by the user terminal 31, it is again converted by the gateway 55 from wtp (step 671) to http (step 673. The gateway server 55 also adds the cookie (step 672). As a cookie is now present when a check (62) is made by the proxy server 57, the proxy server 57 allows the request to be forwarded to the network 19.

## Claims

1. An access control system for controlling access from a terminal (31) to a database (19), comprising:
a gateway processor (55) having a means for storing authorisation data relating to terminals (31) authorised to access the database (!9), and means for receiving data requests, means for adding said authorisation data, if present, to data requests originating from said terminals (31), and means for forwarding the data requests; and
an access control processor (57) for controlling access to the database (19), comprising means to access the database in response to data requests received form the gateway processor (55) carrying said authorisation data, means to perform a security check process with terminals (31) originating data requests not carrying said authorisation data, and means to generate authorisation data for storage by the gateway processor (55) in response to a successful security check.

2. An access control system according to claim 1 having a logon server (58) arranged to initiate the security check process, the access control processor (57) being arranged such that data requests not carrying said authorisation data are refused unless addressed to the logon server (58).

3. An access control system according to claim 1 or 2 wherein the gateway processor (55) has means for storing data requests received from terminals (31) for which authorisation data is not currently stored, and retrieving the stored data request in response to receipt from the access control processor (57) of authorisation data generated in respect of that terminal.

4. An access control system according to claim 3, wherein the gateway processor (55) has means for transmitting an authorisation request message to the access control processor (57) if said authorisation data is not present.

5. An access control system according to claim 3, wherein the storage means for data requests received from terminals (31) for which authorisation data is not currently stored is the access control processor (57), the access control processor (57) being arranged to return the data request to the gateway processor when authorisation data has been generated in respect of that terminal.

6. An access control system according to any preceding claim, wherein the gateway processor has means for translating data messages between a protocol used by the user terminal 31 and a different protocol used by the access control processor (57) and the database (19).

7. An access control system according to any preceding claim, wherein the access control processor (57) has means for translating data messages between a language used by the user terminal (31) and a different language used by the database (19).

8. An access control system according to any preceding claim, wherein the access control processor (57) has means for delivering a security challenge to a terminal (31) and receiving a response, and responding to a correct response by generating the authorisation data.

9. An access control system (50) according to any preceding claim, in association with a routing node (14) arranged such that all communication between any two of the access control system (50), the database (19), and a user terminal (31) is routed by way of the routing node (14), and all the routing node being arranged such that all communication from user terminal (31) addressed to the database (19) is routed to the access control system (50).

10. A method of controlling access from a terminal (31) to a database (19), comprising:
receiving a data request from the terminal (step 611),
checking whether authorisation data has been stored for said terminal (31) (step 613, 62)
if said authorisation data has not been stored, performing a security check process with the terminal (31), (step 63, 64)
generating and storing authorisation data in response to a successful security check (step 65)
accessing said database (19) (step 67),
wherein the stored authorisation data, if present, is added to the data request if authorisation data is present for the said terminal (31) (step 613), such that a security check is not required for requests from terminals for which authorisation data has previously been stored (step 65).

11. A method according to claim 10 wherein data requests not carrying said authorisation data are refused unless addressed to a logon server (58) arranged to initiate the security check process

12. A method according to claim 10 or 11 wherein data requests are translated from a language used by the terminal (31) to a language used by the database (19).

13. A method of controlling access from a terminal (31) to a database (19), wherein all communication between the user terminal (31) and the database (19) is routed by way of a routing node (14), and all communication from the user terminals (31) addressed to the database (19) is subjected to the method of claim 10, 11 or 12.
